# EUROPÄISCHE PATENTSCHRIFT

(11) **EP 1 820 982 B1**
(45) Veröffentlichungstag und Bekanntmachung des Hinweises auf die Patenterteilung: **21.07.2010**
(21) Anmeldenummer: 07002388.2
(22) Anmeldetag: 03.02.2007
(51) Int. Cl.: F16C 29/00, F16C 29/06, F16C 29/12

(54) **Linearführungseinrichtung mit Vorspannungseinstelleinrichtung**
Linear guide device with pre-stressing adjusting device
Dispositif de guidage linéaire doté d'un dispositif de réglage de pré-tension

(30) Priorität: 15.02.2006 DE 102006007068
(43) Veröffentlichungstag der Anmeldung: 22.08.2007
(73) Patentinhaber: ROBERT BOSCH GMBH, 70469 Stuttgart (DE)
(72) Erfinder: Keller, Bernhard, 97535 Kaisten (DE); Hoherz, Roland, 97490 Kützberg (DE)
(74) Vertreter: Maiß, Harald

(56) Entgegenhaltungen:
- EP-A- 0 653 574
- DE-A1- 19 805 449
- DE-A1- 19 961 869
- JP-A- 61 266 825

## Beschreibung

Die vorliegende Erfindung betrifft eine Linearführungsvorrichtung, umfassend eine Führungsschienenanordnung mit wenigstens einer Führungsschiene und einen auf der Führungsschienenanordnung in einer Führungsrichtung geführten Führungswagen mit einer Basiseinheit und die Führungsschienenanordnung teilweise umgreifenden Schenkeln, wobei der Führungswagen wenigstens eine Vorspannungseinstelleinrichtung umfasst, mittels derer eine Vorspannung der Schenkel des Führungswagens gegen die Führungsschienenanordnung einstellbar ist.

Eine derartige Linearführungsvorrichtung ist beispielsweise aus der EP-A-0 653 574 bekannt, die den nächstkommenden Stand der Technik bildet. Bei der bekannten Linearführungsvorrichtung ist die Vorspannung der Schenkel des Führungswagens gegen die Führungsschienenanordnung dadurch einstellbar, dass durch Verschieben eines Keils oder durch Drehen einer entsprechend geformten Welle ein Schenkelabschnitt des Führungswagens in Richtung auf die Führungsschienenanordnung elastisch verformt wird. Dies hat den Nachteil, dass die Vorspannungseinstellung nicht feinfühlig genug ist. Insbesondere dann, wenn zum Verschieben des Keilelements eine Schraube verwendet wird, gibt das Einschraubmoment der Schraube nur wenig Aufschluss über die vorliegende Vorspannung.

Aus der DE 199 61 869 A1 ist eine Justiervorrichtung für Maschinenteile, insbesondere von Druckmaschinen bekannt. Zur Lageverstellung der Maschinenteile wird unter anderem eine Kniehebelanordnung vorgeschlagen, mit der große Verstellkräfte und eine hohe Verstellgenauigkeit erzielt werden kann.

Aus der DE 198 05 449 A1 Linearbewegungsvorrichtung mit einer Bremsvorrichtung bekannt, mit der die Längsbewegung des Führungswagens an der Führungsschiene abgebremst werden kann. Zur Betätigung der Bremsvorrichtung wird unter anderem ein Kniehebel vorgeschlagen, der einstückig oder mehrteilig ausgeführt sein kann.

Aus der JP 61-266 825 A ist eine Linearbewegungsvorrichtung mit einer Klemmvorrichtung bekannt, mit der der Führungswagen an der Führungsschiene festgeklemmt werden kann. Die entsprechende Klemmkraft wird von einem Pneumatikzylinder über eine Kniehebelanordnung in die Führungsschiene eingeleitet.

Demgegenüber ist es Aufgabe der vorliegenden Erfindung, eine gattungsgemäße Linearführungsvorrichtung dahingehend zu verbessern, dass eine feinfühligere Vorspannungseinstellung möglich ist und dass ein Monteur den erwünschten Zustand mit geringer Vorspannung leicht auffinden kann.

Zur Lösung dieser Aufgabe stellt die vorliegende Erfindung eine Linearführungsvorrichtung bereit, umfassend eine Führungsschienenanordnung mit wenigstens einer Führungsschiene und einen auf der einen Führungsschienenanordnung in einer Führungsrichtung geführten Führungswagen mit einer Basiseinheit und die Führungsschienenanordnung teilweise umgreifenden Schenkeln, wobei der Führungswagen wenigstens eine Vorspannungseinstelleinrichtung umfasst, mittels derer eine Vorspannung der Schenkel des Führungswagens gegen die Führungsschienenanordnung einstellbar ist dadurch gekennzeichnet, dass die Vorspannungseinstelleinrichtung wenigstens einen Stab umfasst, dessen eines Ende an einem Schenkel des Führungswagens angelenkt ist und dessen anderes Ende mittels einer Verstelleinrichtung in einer Verstellrichtung verstellbar ist.

Diese erfindungsgemäße Vorspannungseinstelleinrichtung hat den Vorteil, dass mit relativ großen Verstellwegen kleine Vorspannwege erzeugt werden. Außerdem ist durch diese Übersetzung großer Verstellwege zu kleinen Vorspannwegen eine feinfühlige Vorspannungseinstellung möglich. Für die Feinfühligkeit der Vorspannungseinstellung ist es ferner vorteilhaft, wenn die einzelnen Komponenten der Vorspannungseinstelleinrichtung möglichst steif ausgebildet sind. Durch den an einem Schenkel des Führungswagens angelenkten Stab treten in den beteiligten Bauteilen bei der erfindungsgemäßen Vorspannungseinstelleinrichtung kaum Biegekräfte auf, sodass die Verformungen gering bleiben.

Vorzugsweise erstreckt sich der Stab unter einem Winkel von etwa 0° bis 45° relativ zu einer senkrecht zur Führungsrichtung verlaufenden Querrichtung der Führungsschienenanordnung, so dass bei einer Verstellung der Vorspannungseinstelleinrichtung eine möglichst große Kraftkomponente in Richtung auf die Führungsschienenanordnung auf den Schenkel des Führungswagens ausgeübt werden kann.

Vorzugsweise kann weiterhin vorgesehen sein, dass die Verstelleinrichtung ein Angriffsteil umfasst, an welchem das andere Ende des Stabs angelenkt ist. Ein derartiges Angriffsteil möglicht einen einfachen Eingriff von Verstelleinrichtung und Stab.

Zusätzlich kann vorgesehen sein, dass die Verstelleinrichtung eine Schraube umfasst, die sich entweder an der Basiseinheit des Führungswagens oder an dem Angriffsteil abstützt und in ein Gewinde eingreift, das am Angriffsteil oder an der Basiseinheit des Führungswagens ausgebildet ist. Eine Schraube ermöglicht ein besonders einfaches Einstellen der gewünschten Vorspannung, da der Monteur beim Eindrehen der Schraube einen starken Drehmomentanstieg erfährt, sobald die Führung vom spielbehafteten in den vorgespannten Zustand übergeht. Zudem kann durch das Vorsehen eines separaten Angriffsteils die Verbindung der Schraube mit dem Stab besonders einfach bewerkstelligt werden.

Bei einer bevorzugten Ausführungsform der erfindungsgemäßen Linearführungsvorrichtung kann zwischen dem Angriffsteil und dem Basisarm ein zweiter Stab vorgesehen sein, der zusammen mit dem ersten Stab und dem Angriffsteil einen Kniehebel bildet. Ein derartiger, an seinen beiden Enden am Führungswagen abgestützter Kniehebel ist einerseits besonders stabil und bietet andererseits eine besonders gute Kraftübersetzung der Vorspannungseinstelleinrichtung.

Weiterhin kann vorgesehen sein, dass der eine Stab oder/und der zweite Stab oder/und das Angriffsteil einstückig mit dem Führungswagen ausgebildet ist, wodurch der beispielsweise ausgehend von einem Aluminiumstrangpressprofil gefertigte Führungswagen besonders einfach mit der erfindungsgemäßen Vorspannungseinstelleinrichtung versehen werden kann.

Vorzugsweise sind zwischen dem Angriffsteil und dem wenigstens einen Stab und/oder zwischen dem wenigstens einen Stab und dem Schenkel oder der Basiseinheit des Führungswagens Gelenke durch Materialschwächung ausgebildet. Derartige durch Materialschwächung ausgebildete Gelenke haben einerseits den Vorteil einer besonders einfachen Herstellbarkeit und stellen andererseits sicher, dass keine Biegekräfte in dem Stab und/oder dem Schenkel des Führungswagens selbst auftreten, wodurch die Präzision der Vorspannungseinstellung verbessert wird.

Die Führungsschienenanordnung kann zwei Führungsschienen umfassen, es sind aber auch Linearführungsvorrichtungen denkbar, bei denen die Führungsschienenanordnung lediglich eine oder mehr als zwei Führungsschienen umfasst.

Wenn zwei oder mehr Führungsschienen vorgesehen sind, ist vorzugsweise lediglich einer der Führungsschienen wenigstens eine Vorspannungseinstelleinrichtung zugeordnet. Diese Anordnung hat den Vorteil eines einfacheren Aufbaus des Führungswagens, wobei unter Berücksichtigung der Tatsache, dass die Vorspannwege in der Größenordnung von etwa 0,1 mm liegen, immer noch eine ausreichend präzise Ausrichtung des Führungswagens sichergestellt werden kann. Beispielsweise kann dann, wenn der Führungswagen durch einen Gewindetrieb angetrieben wird, die Elastizität der Gewindespindel ausreichen, um die kleinen Relatiwerlagerungen des Führungswagens bezogen auf die Achse der Gewindespindel durch ein leichtes Verbiegen der Gewindespindel aufzunehmen.

Bei einer weiteren Ausgestaltungsmöglichkeit der vorliegenden Erfindung können wenigstens zwei Vorspannungseinstelleinrichtungen vorgesehen sein, welche in Längsrichtung der Führungsschienenanordnung beabstandet und dem gleichen Schenkel des Führungswagens zugeordnet sind. Auf diese Weise können Parallelitätsfehler in den Laufbahnen des Führungswagens ausgeglichen werden.

Während grundsätzlich auch der Einsatz einer Gleitführung der Schenkel des Führungswagens auf der Führungsschienenanordnung denkbar ist, stehen die Schenkel vorzugsweise über wenigstens einen Wälzkörperumlauf mit der Führungsschienenanordnung in Eingriff. Ein Wälzkörperumlauf ist hierbei ein endloser Wälzkörperkanal, in dem Wälzkörper in einem lasttragenden Abschnitt zwischen der Führungsschiene und dem Schenkel des Führungswagens abrollen und einem Rückführungsabschnitt, in dem Wälzkörper in einem unbelastetem Zustand vom in Bewegungsrichtung der Wälzkörper hinteren Ende des lasttragenden Abschnitts zu seinem vorderen Ende zurückgeführt werden, sodass ein Wälzkörperkreislauf gebildet wird.

Weitere Merkmale und Vorteile der vorliegenden Erfindung werden aus der folgenden detaillierten Beschreibung zusammen mit den beigefügten Zeichnungen ersichtlich, wobei:
- Fig. 1: eine Schnittansicht einer erfindungsgemäßen Linearführungsvorrichtung ist;

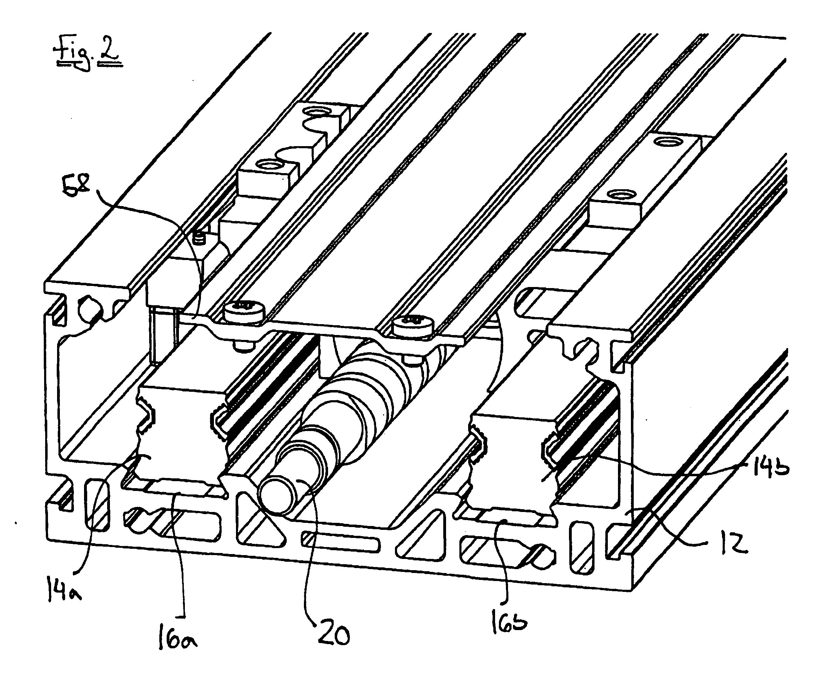

- Fig. 2: eine perspektivische Ansicht eines Führungsgehäuses mit Führungsschienen der Linearführungsvorrichtung aus Fig. 1 ist;
- Fig. 3: eine perspektivische Ansicht eines Führungswagens der Linearführungsvorrichtung aus Fig. 1 ist;

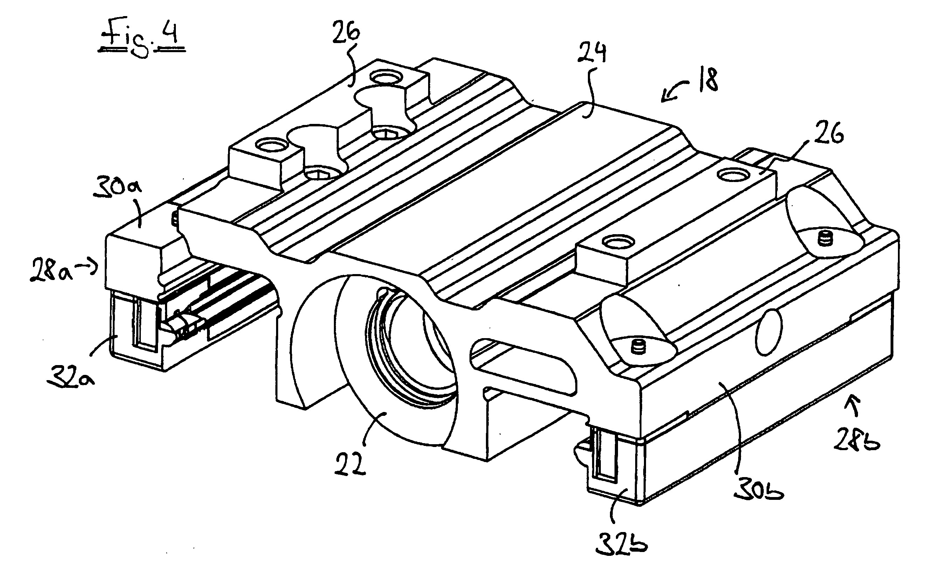

- Fig. 4: eine weitere perspektivische Ansicht des Führungswagens aus Fig. 3 ist; und

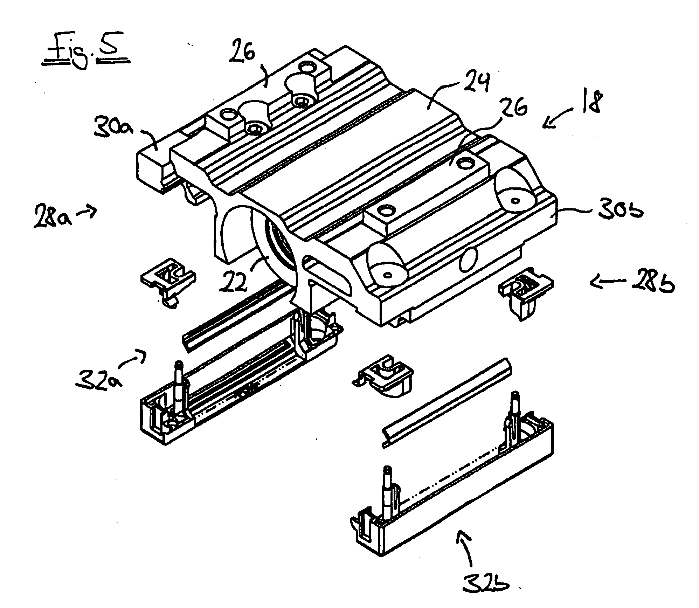

- Fig. 5: eine Explosionsdarstellung des Führungswagens aus Fig. 4 ist.

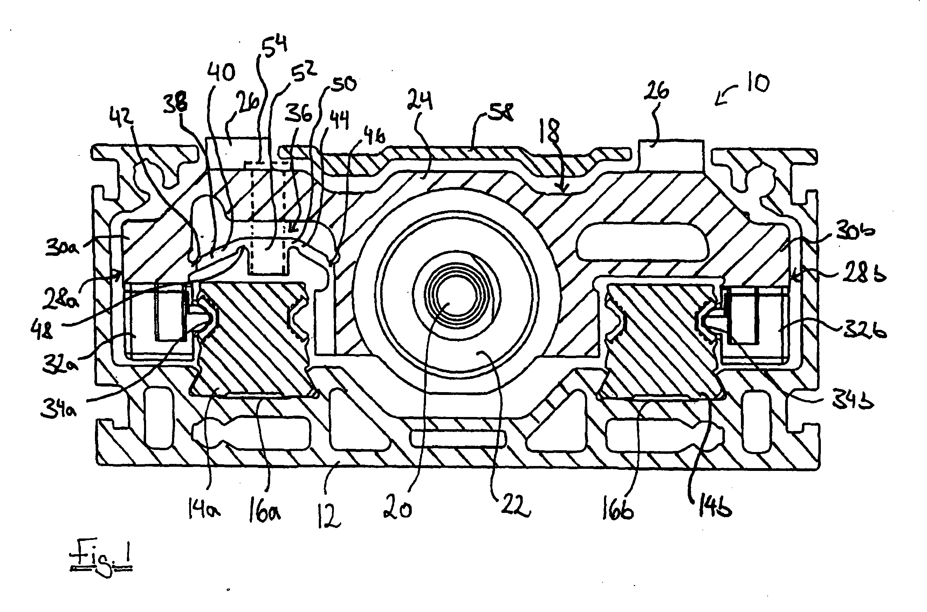

Wie aus Fig. 1 ersichtlich, umfasst eine Linearführungsvorrichtung 10 ein Führungsgehäuse 12, in dem zwei Führungsschienen 14a und 14b dadurch befestigt sind, dass ein Schwalbenschwanzfuß der Führungsschienen 14a und 14b in jeweiligen Nuten 16a und 16b im Führungsgehäuse 12 verstemmt ist. Zum Antrieb eines im Führungsgehäuse 12 geführten Führungswagens 18 ist eine Gewindespindel 20 an den (nicht dargestellten) Enden des Führungsgehäuses 12 drehbar gelagert. Eine am Führungswagen 18 befestigte Gewindemutter 22 steht mit der Gewindespindel 20 in Gewindeeingriff. Ferner ist eine Abdeckplatte 58 vorgesehen, die an den Enden des Führungsgehäuses 12 befestigt ist.

Der Führungswagen 18 umfasst eine Basiseinheit 24, die mit Aufsätzen 26 zur Befestigung eines durch die Linearführungsvorrichtung 10 zu bewegenden Objekts versehen ist, und Schenkel 28a, 28b, die jeweils eine zugeordnete Führungsschiene 14a, 14b seitlich umgreifen und an dieser Führungsschiene in einer Führungsrichtung geführt sind.

Jeder der Schenkel 28a, 28b umfasst hierbei einen integral mit der Basiseinheit 24 ausgebildeten ersten Schenkelabschnitt 30a, 30b und eine an diesem ersten Schenkelabschnitt 30a, 30b angebrachte Wälzkörperumlaufbaugruppe 32a, 32b. Jede Wälzkörperumlaufbaugruppe 32a, 32b steht über in einem lasttragenden Wälzkörperkanal geführte Wälzkörper (nicht gezeigt) mit einer zugeordneten Führungsnut 34a, 34b der zugeordneten Führungsschiene 14a, 14b in Eingriff. Innerhalb der Wälzkörperumlaufbaugruppen 32a, 32b ist jeweils ein (nicht gezeigter) Wälzkörperrückführkanal gebildet, sodass ein endloser Wälzkörperkreislauf bereitgestellt ist. Einem Schenkel 28a des Führungswagens 24 ist weiterhin eine Vorspannungseinstelleinrichtung 36 zugeordnet.

Diese Vorspannungseinstelleinrichtung 36 umfasst einen integral mit dem ersten Schenkelabschnitt 30a und der Basiseinheit 24 des Führungswagens 18 ausgebildeten Kniehebel 38, dessen erster Stab 40 mittels eines durch Materialschwächung ausgebildeten Gelenks 42 am ersten Schenkelabschnitt 30a des Schenkels 28a angelenkt ist, und dessen zweiter Stab 44 mittels eines durch Materialschwächung gebildeten Gelenks 46 an der Basiseinheit 24 des Führungswagens 18 angelenkt ist. Beide Stäbe 40, 44 erstrecken sich hierbei unter einem Winkel von etwa 0° bis 45° relativ zu einer Querrichtung senkrecht zur Führungsrichtung der Führungsschienenanordnung. Die beiden Stäbe 40, 44 des Kniehebels 38 sind durch ein Angriffsteil 52 miteinander verbunden, wobei jeweils zwischen einem Stab 40, 44 und dem Angriffsteil 52 Gelenke 48, 50 durch Materialschwächung gebildet sind. Eine in Fig. 1 gestrichelt dargestellte Verstellschraube 54 stützt sich an der Basiseinheit 24 des Führungswagens 18 ab und greift in ein Gewinde im Angriffsteil 52 ein.

Da die Nuten 16a, 16b im Führungsgehäuse 12 bei ihrer Herstellung nicht spanend bearbeitet werden, ergibt sich das Problem, dass die Nuten 16a, 16b beim Strangpressen des Führungsgehäuses 12 nicht mit einem genügend genauen Abstandsmaß hergestellt werden können. Die fertigungstechnische Ungenauigkeit kann durch die erfindungsgemäße Vorspannungseinstelleinrichtung 36 ausgeglichen werden. Durch Verdrehen der Verstellschraube 54 wird das Angriffsteil 52 des Kniehebels 38 in Fig. 1 nach oben oder nach unten bewegt. Dadurch zieht der erste Stab 40 des Kniehebels 38 den ersten Schenkelabschnitt 30a in Richtung zur zugeordneten Führungsschiene 14a hin oder drückt ihn von dieser weg, sodass eine gewünschte Vorspannung des Schenkels 28a gegen die zugeordnete Führungsschiene 14a und somit auch des Schenkels 28b gegen seine zugeordnete Führungsschiene 14b erreicht werden kann. Kleine seitliche Verlagerungen des Führungswagens 18 während der Vorspannungseinstellung lediglich an einem Schenkel 28a sind hierbei im Bereich der Toleranzgrenzen des Eingriffs der Gewindemutter 22 mit der Gewindespindel 20, und können zusätzlich durch eine elastische Verformung der Gewindespindel 20 aufgenommen werden.

Das erfindungsgemäße Prinzip des Kniehebels zur Vorspannungseinstellung des Schenkels 28a gegen die zugeordnete Führungsschiene 14a hat den Vorteil, dass mit relativ großen Schraubwegen der Verstellschraube 54 kleine Verstellwege des Schenkels 28a des Führungswagens 18 erreicht werden können. Auf diese Weise erfährt der Monteur beim Eindrehen der Verstellschraube 54 einen starken Drehmomentanstieg, sobald die Führung des Führungswagens 18 auf den Führungsschienen 14a, 14b vom spielbehafteten in den vorgespannten Zustand übergeht. Er kann somit den erwünschten Zustand mit geringer Vorspannung sehr leicht auffinden.

Die Verwendung des Kniehebels 38 hat den weiteren Vorteil, dass die Vorspannungseinstelleinrichtung 36 hierdurch insgesamt sehr steif wird, sodass der Kraftanstieg bei Erreichen eines vorgespannten Zustands über einen sehr kurzen Drehweg der Verstellschraube 54 erfolgt. Weiterhin treten bei dem Kniehebel 28 keine Biegekräfte in den beteiligten Bauteilen auf, sodass die Verformungen der Basiseinheit 24 und des Schenkels 28a gering bleiben.

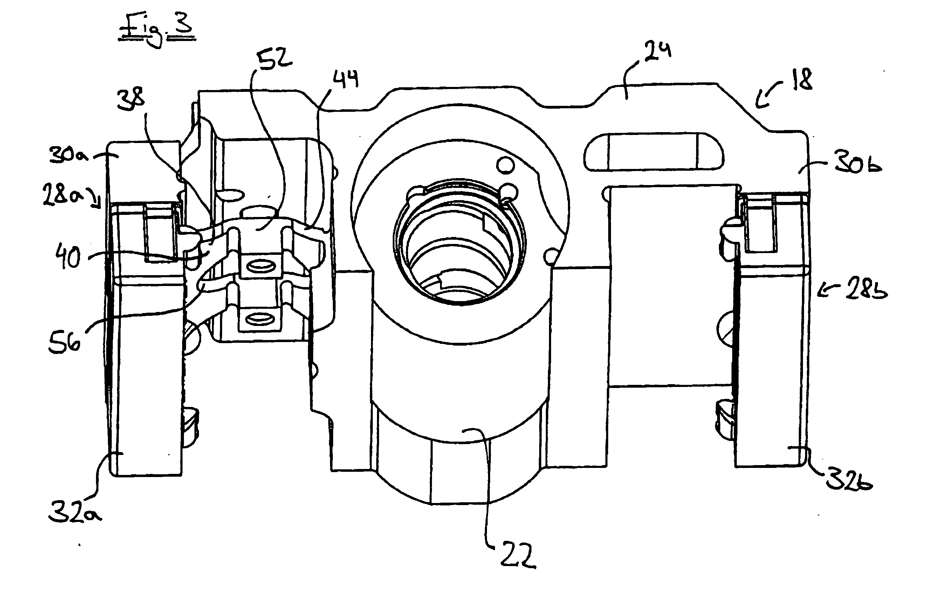

Wie in Fig. 3 gezeigt, sind bei der dargestellten Ausführungsform der vorliegenden Erfindung in Längsrichtung der Führungsschiene 14a mehrere Kniehebel 38 vorgesehen, die durch Ausfräsungen 56 voneinander getrennt sind. Hierdurch können durch individuelle Einstellung der Vorspannung an jedem separaten Kniehebel 38 Parallelitätsfehler in den Laufbahnen des Führungswagens 18 ausgeglichen werden.

Bei der dargestellten Ausführungsform der vorliegenden Erfindung ist der Führungswagen 18 an den Außenseiten der jeweiligen Führungsschienen 14a, 14b geführt, sodass die Vorspannungseinstelleinrichtung 36 zweckmäßig derart ausgebildet ist, dass die Verstellschraube 54 zum Erhöhen einer Vorspannung zwischen dem Schenkel 28a und der zugeordneten Führungsschiene 14a das Angriffsteil 52 des Kniehebels 38 nach oben zieht. Es ist allerdings auch denkbar, dass die Schenkel des Führungswagens an den Innenseiten zugeordneter Führungsschienen geführt sind, und die Verstellschraube einer derartigen erfindungsgemäßen Vorspannungseinstelleinrichtung ein Angriffsteil eines Kniehebels nach unten drückt, um die Vorspannung der Schenkel gegen die Führungsschiene zu erhöhen.

Weiterhin ist denkbar, dass statt des hier dargestellten Kniehebels 38 lediglich der erste Stab 40 und das Angriffsteil 52 vorgesehen sind, und der zweite Stab 44 weggelassen ist. Auch eine derartige Anordnung weist den erfindungsgemäßen Vorteil großer Verstellwege bei kleinen Vorspannwegen auf, ist allerdings nicht ganz so stabil und steif wie der bevorzugte Kniehebel 38.

## Patentansprüche

1. Linearführungsvorrichtung (10), umfassend eine Führungsschienenanordnung (14a, 14b) mit wenigstens einer Führungsschiene (14a, 14b) und einen auf der Führungsschienenanordnung (14a, 14b) in einer Führungsrichtung geführten Führungswagen (18) mit einer Basiseinheit (24) und die Führungsschienenanordnung (14a, 14b) teilweise umgreifenden Schenkeln (28a, 28b), wobei der Führungswagen (18) wenigstens eine Vorspannungseinstelleinrichtung (36) umfasst, mittels derer eine Vorspannung der Schenkel (28a, 28b) des Führungswagens (18) gegen die Führungsschienenanordnung (14a, 14b) einstellbar ist,
**dadurch gekennzeichnet, dass** die Vorspannungseinstelleinrichtung (36) wenigstens einen ersten Stab (40) umfasst, dessen eines Ende an einem Schenkel (28a) des Führungswagens (18) angelenkt ist und dessen anderes Ende mittels einer Verstelleinrichtung (52, 54) in einer Verstellrichtung verstellbar ist,
wobei die Verstelleinrichtung (52, 54) ein Angriffsteil (52) umfasst, an welchem das andere Ende des ersten Stabs (40) angelenkt ist,
wobei zwischen dem Angriffsteil (52) und der Basiseinheit (24) ein zweiter Stab (44) vorgesehen ist, der zusammen mit dem ersten Stab (40) und dem Angriffsteil (52) einen Kniehebel (38) bildet,
wobei der wenigstens eine erste Stab (40) und der zweite Stab (44) und das Angriffsteil (52) einstückig mit dem Führungswagen (18) ausgebildet sind.

2. Linearführungsvorrichtung (10) nach Anspruch 1,
**dadurch gekennzeichnet, dass** sich der erste und/oder der zweite Stab (40; 44) unter einem Winkel von etwa 0° bis 45° relativ zu einer senkrecht zur Führungsrichtung verlaufenden Querrichtung der Führungsschienenanordnung (14a, 14b) erstreckt.

3. Linearführungsvorrichtung (10) nach einem der vorstehenden Ansprüche,
**dadurch gekennzeichnet, dass** die Verstelleinrichtung (52, 54) eine Schraube (54) umfasst, die sich entweder an der Basiseinheit (24) des Führungswagens (18) oder an dem Angriffsteil (52) abstützt und in ein Gewinde eingreift, das am Angriffsteil (52) oder an der Basiseinheit (24) des Führungswagens (18) ausgebildet ist.

4. Linearführungsvorrichtung (10) nach einem der vorstehenden Ansprüche,
**dadurch gekennzeichnet, dass** die Anlenkstellen zwischen dem Angriffsteil (52) und dem wenigstens einen Stab (40, 44) und/oder zwischen dem wenigstens einen Stab (40, 44) und dem Schenkel (28a) oder der Basiseinheit (24) des Führungswagens (18) bildende Gelenke (42, 46, 48, 50) durch Materialschwächung ausgebildet sind.

5. Linearführungsvorrichtung (10) nach einem der vorstehenden Ansprüche,
**dadurch gekennzeichnet, dass** die Führungsschienenanordnung (14a, 14b) zwei Führungsschienen (14a, 14b) umfasst.

6. Linearführungsvorrichtung (10) nach Anspruch 5,
**dadurch gekennzeichnet, dass** lediglich einer der Führungsschienen (14a) wenigstens eine Vorspannungseinstelleinrichtung (36) zugeordnet ist.

7. Linearführungsvorrichtung (10) nach einem der vorstehenden Ansprüche,
**dadurch gekennzeichnet, dass** wenigstens zwei Vorspannungseinstelleinrichtungen (36) vorgesehen sind, welche in Längsrichtung der Führungsschienenanordnung (14a, 14b) beabstandet und dem gleichen Schenkel (28a) des Führungswagens (18) zugeordnet sind.

8. Linearführungsvorrichtung (10) nach einem der vorstehenden Ansprüche,
**dadurch gekennzeichnet, dass** die Schenkel (28a, 28b) mit der Führungsschienenanordnung (14a, 14b) über wenigstens einen Wälzkörperumlauf in Eingriff stehen.

## Claims

1. Linear guide device (10), comprising a guide-rail arrangement (14a, 14b) with at least one guide rail (14a, 14b), and a guide carriage (18) guided in a guidance direction on the guide-rail arrangement (14a, 14b) and having a basic unit (24), and also legs (28a, 28b) partially surrounding the guide-rail arrangement (14a, 14b), the guide carriage (18) comprising at least one prestress setting device (36), by means of which a prestress of the legs (28a, 28b) of the guide carriage (18) against the guide-rail arrangement (14a, 14b) can be set, **characterized in that** the prestress setting device (36) comprises at least one first bar (40), one end of which is articulated on a leg (28a) of the guide carriage (18) and the other end of which can be adjusted in the direction of adjustment by means of an adjustment device (52, 54), the adjustment device (52, 54) comprising an engagement part (52), on which the other end of the first bar (40) is articulated, there being provided between the engagement part (52) and the basic unit (24), a second bar (44) which together with the first bar (40) and with the engagement part (52) forms a toggle lever (38), at least one first bar (40) and the second bar (44) and engagement part (52) being formed in one piece with the guide carriage (18).

2. Linear guide device (10) according to Claim 1, **characterized in that** the first and/or the second bar (40; 44) extend/extends at an angle of about 0° to 45° in relation to a transverse direction of the guide-rail arrangement (14a, 14b), the said transverse direction running perpendicularly with respect to the guidance direction.

3. Linear guide device (10) according to one of the preceding claims, **characterized in that** the adjustment device (52, 54) comprises a screw (54) which is supported either on the basic unit (24) of the guide carriage (18) or on the engagement part (52) and which engages into a thread which is formed on the engagement part (52) or on the basic unit (24) of the guide carriage (18).

4. Linear guide device (10) according to one of the preceding claims, **characterized in that** joints (42, 46, 48, 50) which form the points of articulation between the engagement part (52) and the at least one bar (40, 44) and/or between the at least one bar (40, 44) and the leg (28a) or the basic unit (24) of the guide carriage (18) are produced by means of a material weakening.

5. Linear guide device (10) according to one of the preceding claims, **characterized in that** the guide-rail arrangement (14a, 14b) comprises two guide rails (14a, 14b).

6. Linear guide device (10) according to Claim 5, **characterized in that** only one of the guide rails (14a) is assigned at least one prestress setting device (36).

7. Linear guide device (10) according to one of the preceding claims, **characterized in that** at least two prestress setting devices (36) are provided, which are spaced apart in the longitudinal direction of the guide-rail arrangement (14a, 14b) and which are assigned to the same leg (28a) of the guide carriage (18).

8. Linear guide device (10) according to one of the preceding claims, **characterized in that** the legs (28a, 28b) are in engagement with the guide-rail arrangement (14a, 14b) via at least one rolling-body orbital arrangement.

## Revendications

1. Dispositif de guidage linéaire (10), comprenant un agencement de rail de guidage (14a, 14b), avec au moins un rail de guidage (14a, 14b) et un chariot de guidage (18) guidé dans une direction de guidage sur l'agencement de rail de guidage (14a, 14b), avec une unité de base (24) et des branches (28a, 28b) venant en prise partielle autour de l'agencement de rail de guidage (14a, 14b), le chariot de guidage (18) comprenant au moins un dispositif d'ajustement de précontrainte (36) au moyen duquel une précontrainte des branches (28a, 28b) du chariot de guidage (18) contre l'agencement de rail de guidage (14a, 14b) peut être ajustée,
**caractérisé en ce que** le dispositif d'ajustement de précontrainte (36) comprend au moins une première barre (40) dont une extrémité est articulée à une branche (28a) du chariot de guidage (18) et dont l'autre extrémité peut être déplacée au moyen d'un dispositif de réglage (52, 54) dans une direction de réglage,
le dispositif de réglage (52, 54) comprenant une partie de préhension (52) à laquelle l'autre extrémité de la première barre (40) est articulée,
entre la partie de préhension (52) et la partie de base (24) étant prévue une deuxième barre (44), qui forme conjointement avec la première barre (40) et la partie de préhension (52) un joint à genouillère (38),
l'au moins une première barre (40) et la deuxième barre (44) et la partie de préhension (52) étant réalisées d'une seule pièce avec le chariot de guidage (18).

2. Dispositif de guidage linéaire (10) selon la revendication 1,
**caractérisé en ce que** la première et/ou la deuxième barre (40 ; 44) s'étendent suivant un angle d'environ 0° à 45° par rapport à une direction transversale de l'agencement de rail de guidage (14a, 14b) s'étendant perpendiculairement à la direction de guidage.

3. Dispositif de guidage linéaire (10) selon l'une quelconque des revendications précédentes, **caractérisé en ce que** le dispositif de réglage (52, 54) comprend une vis (54), qui s'appuie soit sur l'unité de base (24) du chariot de guidage (18) soit sur la partie de préhension (52) et qui vient en prise dans un filetage qui est réalisé sur la partie de préhension (52) ou sur la partie de base (24) du chariot de guidage (18).

4. Dispositif de guidage linéaire (10) selon l'une quelconque des revendications précédentes, **caractérisé en ce que** les articulations (42, 46, 48, 50) formant des points d'articulation entre la partie de préhension (52) et l'au moins une barre (40, 44) et/ou entre l'au moins une barre (40, 44) et la branche (28a) ou la partie de base (24) du chariot de guidage (18) sont réalisées par un affaiblissement de matière.

5. Dispositif de guidage linéaire (10) selon l'une quelconque des revendications précédentes, **caractérisé en ce que** l'agencement de rail de guidage (14a, 14b) comprend deux rails de guidage (14a, 14b).

6. Dispositif de guidage linéaire (10) selon la revendication 5, **caractérisé en ce que** seulement l'un des rails de guidage (14a) est associé à au moins un dispositif d'ajustement de précontrainte (36).

7. Dispositif de guidage linéaire (10) selon l'une quelconque des revendications précédentes, **caractérisé en ce qu'**au moins deux dispositifs d'ajustement de précontrainte (36) sont prévus, lesquels sont espacés dans la direction longitudinale de l'agencement de rail de guidage (14a, 14b) et sont associés à la même branche (28a) du chariot de guidage (18).

8. Dispositif de guidage linéaire (10) selon l'une quelconque des revendications précédentes, **caractérisé en ce que** les branches (28a, 28b) sont en prise avec l'agencement de rail de guidage (14a, 14b) par le biais d'au moins une circulation de corps de roulement.
